# EUROPEAN PATENT APPLICATION

(11) **EP 4 679 673 A1**
(43) Date of publication of application: **14.01.2026**
(21) Application number: 24188458.4
(22) Date of filing: 12.07.2024
(51) Int. Cl.: H02J 50/00, H02J 50/12, H02J 50/40

(54) **WIRELESS POWER TRANSFER WITH SELF-RESONATING COILS**

(71) Applicant: Nicola B.V., 2583 WG The Hague (NL)
(72) Inventor: Yetgin, Süleyman Tan, The Hague (NL)
(74) Representative: Kayahan, Senem

(57) **Abstract**

The present invention relates to an advanced on-air energy transmission system utilizing magnetic resonance technology and radio frequency (MRT-E), designed to enable efficient energy transfer over practical distances for daily applications.

## Description

### Technical Field

The present invention relates to an advanced on-air energy transmission system utilizing magnetic resonance technology and radio frequency (MRT-E), designed to enable efficient energy transfer over practical distances for daily applications.

### State of the Art

Wireless power is used often by technology companies, and it can be difficult to differentiate between definitions. There are several ways to transfer power wirelessly. Capacitive or Induction charging, Beam charging and Ultrasound are some technologies that have existed for a while. None of these technologies have found wide adaptation. To use Wireless Power in wider (consumer) applications, it must be efficient, targeted, mobile, non-line-of-sight, reliable and safe. Power that is being delivered over distance (or over the air), while in motion, safely and effectively, with minimal to no user intervention. The wattage transferred must be sufficient to operate/charge not only one but several devices simultaneously, like a Wi-Fi modem feeds at once several devices connected, and it must be economical in terms of power loss. Wireless power may be delivered near-field (less than a few centimeters or inches), mid-field (around 90 feet/<30 meter), or far-field (300 feet/<100 meters).

The current state of wireless power transfer (WPT) technology, particularly for low-wattage loads, presents several limitations and challenges. These include restricted transmission distances, directional signal propagation, significant signal loss over long distances, and poor interference handling. Existing systems often require precise alignment between the transmitter and receiver and are hindered by physical obstacles, limiting their practical applications.

All electrical/electronical devices and utilities such as mobile-phones, LED Lamps, Remote-Controls, IoT and Wearable-, Hearable-devices working up to 6 W electricity are needy either wire-connections to electricity source or to Qi (touch pads/touch mats) or batteries. In the current comparable to the invention system, low wattage transfer of up to 1 Watt is supported, operating on a line-of-sight basis. Some of the current systems allows bi-directional and one-to-one transmission of energy at a single level. However, it is unable to achieve a 6 Watt transfer while incorporating all these abilities simultaneously.

Electrical and electronic devices often face spatial limitations due to being tethered by cables or reliant on harmful and costly batteries, touchpads, or power banks. Existing wireless power transfer systems typically have a limited transmission range, often less than a few meters. Signal loss is a significant issue in current WPT systems. Signal strength decreases significantly over longer distances, leading to inefficient energy transfer and practical usability confined to short-range applications. As the distance between the transmitter and receiver increases, the efficiency of energy transfer drops sharply. This inefficiency makes it challenging to deliver sufficient power over extended distances, restricting the use of these systems to close-proximity applications. This includes devices such as smartphones, LED lamps, cameras, displays, wearables, IoT devices, and cardiac pacemakers.

Most current systems rely on directional antennas, which require precise alignment between the transmitter and receiver. This directional nature limits the flexibility of the system, as any misalignment can lead to reduced efficiency or complete failure of power transfer.

The use of batteries harmful to the environment and the health of living beings contributes to waste production. This waste includes plastics, chemicals, and metals used in the production of cables, batteries, and other connector appliances, such as adapters and sockets, as well as all their packaging, transport, and logistics.

Wireless power transfer is significantly affected by physical barriers such as walls, ceilings, and other obstacles. These barriers impede the signal, resulting in further reduction of efficiency and reliability. Current systems are typically unable to maintain effective power transfer through multiple barriers.

Current systems often struggle with interference from other electronic devices and environmental noise. This interference can disrupt the power transfer process, leading to unstable and unreliable energy delivery. Existing shielding techniques are not always effective in mitigating this issue.

Despite these limitations, wireless power transfer technology is employed in various applications, including charging small electronic devices, medical implants, and certain industrial processes. However, the challenges associated with range, efficiency, interference, and obstacle penetration restrict the broader adoption and scalability of these systems.

Existing WPT systems are generally designed to transfer power to a single receiver. Multi-receiver setups face challenges with maintaining consistent power levels across all receivers, especially when the receivers are positioned at different distances or angles relative to the transmitter.

There are several technologies that claim to be wireless power. All of them will be discussed, and the limitations of each technology will be highlighted. The first of these is induction charging. Pad-based technology, or induction charging, delivers power by a magnetic field between two coils of wire. It requires the device to touch or almost touch a charging surface, such as a pad or bowl, so it's considered (very-) near-field. Induction charging is efficient and has been around for a long time-your electric wire free toothbrush is an excellent example. Qi is the standard, and it is currently popular among smartphone accessories developers. It has a power-loss of less than 1%. Since the power is delivered at such proximity to a plugged-in power source, and the user essentially has to give up the device to receive a charge, it's difficult to continue to think of induction charging as being wireless power at all.

The second of these is radio frequency (or RF-based beamforming). RF-based beamforming technologies use directional antennas to deliver wireless power called Blind Adaptive Beamforming or just Beamforming. Beamforming requires complex algorithms to track the receiving device and will stop delivering power if the path is interrupted by objects, due to safety reasons. In other words, it requires a line of sight to work. It also can be dangerous to objects and living beings with transmissions of bigger energy quantities if no interruption capacity is added.

Power transfer capabilities via RF (Radio Frequency) can be categorized into three levels. Low-power RF transfer, typically less than 1 watt, is used for short distances of a few meters, commonly seen in RFID and NFC applications. Mid-power RF transfer, up to around 10 watts, covers several meters and is used in wireless charging pads and IoT devices. High-power RF transfer ranges from tens to hundreds of watts, capable of covering several tens to potentially hundreds of meters in highly optimized systems, with applications including powering drones, remote devices, and experimental setups.

Several factors affect RF power transfer. Frequency plays a significant role, with higher frequencies capable of transferring more power over shorter distances, often used in near-field applications, while lower frequencies can cover longer distances but require larger antennas and suffer more power loss. Regulatory limits set by bodies like the FCC ensure safety and prevent interference with other communications, restricting power levels and frequencies. Environmental factors, such as obstacles like walls and metal objects, can drastically reduce the effective range, while open environments with line-of-sight are ideal for maximizing distance. Advanced technologies like beamforming can focus RF energy in specific directions to extend range and efficiency, and the design of antennas and matching circuits is crucial for optimizing RF power transfer efficiency.

The third of these is ultrasound. Ultrasound-based wireless power technologies, such as the uBeam are claiming electromagnetic (EM) radiation to deliver power over air and in sine wave at 120 kHz and intensity of 155 dB. It has not been verified yet as a viable technology. Difficulties are fraught, e.g., ultrasound energy above 60KHz is absorbed by air at a rate of 50% every meter of distance, meaning that 1000W of ultrasound energy going through the air will lose 999W over 10 meters on top of the free space path loss. What's more, to deliver power over a distance by sound (or ultrasound), people may need 1000 times more energy than used in current applications, such as scanning a human embryo. The safety of such large amounts of ultrasound is yet unknown. Whether the technology at the frequency and intensity proposed by the firm may prove viable remains to be seen yet.

The fourth of these is laser beam. Laser-beam-based wireless power technologies, like Wi-Charge, deliver power via infrared beams of light. The transmitter connects to a standard AC, DC, or USB power source. The receiver unit captures light from the transmitter like a photovoltaic cell. Multiple receivers can be charged simultaneously using an intelligent power-management algorithm embedded in the transmitter. Lasers are good and send targeted energy over a distance, however, infrared beams of light require a direct line of sight with no obstructions. Also, safety is a concern with lasers. Class 1 infrared lasers are known as safe under normal conditions; however, people can't see infrared, and it's unclear what harm prolonged exposure would cause to eyesight. Leveraging laser beams in a room with reflective surfaces, such as windows, monitors, or mirrors may pose a further threat, because the light beams may bounce to unintended locations. Current applications of laser beam technology require heavy and burdensome-looking hardware to function. So far, this technology is only applicable in very specific (industrial) settings.

In the known state of the art, there are various patent and utility model applications regarding the subject. EP1992077B1 discloses a method and apparatus for providing power to e.g., a chargeable device via a radio frequency link. In one aspect, a method of providing power to a chargeable device via radio frequency link comprises generating a substantially un-modulated signal. The method further comprises radiating a substantially un-modulated radio frequency (RF) signal to the chargeable device via a transmit antenna based on the substantially un-modulated signal. The method further comprises powering or charging the chargeable device with power delivered by the substantially un-modulated RF signal.

EP2750145B1 discloses a coil for cordless charging and a cordless charging apparatus using the same, and more particularly, to a coil for cordless charging, which may be formed as a thin coil in spite of the presence of a plurality of coils included therein, and a cordless charging apparatus using the same.

EP2870022B1 discloses a wireless power transfer, and more specifically to devices, systems, and methods related to wireless power transfer to remote systems such as vehicles in a parking facility including batteries and communications therebetween. The apparatus further includes a user interface configured to display information identifying at least one of the one or more charging stations. The apparatus further includes a controller configured to cause a communication link to be established between the vehicle and at least one identified charging station.

The current state of wireless power transfer technology, while promising, is constrained by several technical limitations that impact its efficiency, range, and reliability. Addressing these challenges is crucial for the future development and widespread adoption of wireless power transfer solutions.

In wireless power technology, the power must be focused; it has to go directly to your selected devices to provide the performance you need. Over-air energy shouldn't be wasted. Power should travel over air only to the device of your choice, not to all nearby devices. Power is expensive and should go only to selected devices.

The receiver should be able to move around in spatial freedom while the power is delivered without becoming disconnected from the power source, without slowing down the transfer, and without drawing extra energy away from the power source. The wireless power transmitter should automatically track the devices, without complicated algorithms.

The receiver of the wi-fi signal doesn't have to know where the Wi-Fi modem is placed to receive the Internet. Similarly, the receiver should not be obliged to be placed in front of a wireless power transmitter to receive power. Wi-Fi and Bluetooth are widely accepted as safe. Wireless power should be at the same safety levels. The power being transferred should be enough to operate (feed/charge) the device as convenient as a physical connection. The loss at the transfer should remain comparable to physical means (cable/Qi), id est affordable.

On the other hand, Magnetic Resonance Technology can transfer power exceeding 2 watts, and up to 3.5 watts, within a maximum range of 50 cm. Specifically, it can transfer 3.5 watts at a distance of 1 cm, but only up to 2 watts at 50 cm, indicating that the power diminishes with distance.

### Summary of the Invention

The present invention relates to an advanced on-air energy transmission system utilizing magnetic resonance technology and radio frequency (MRT-E), designed to enable efficient energy transfer over practical distances for daily applications. The MRT-E technology offers greater range, higher load capacity, and increased versatility compared to MRT (magnetic resonance technology).

The purpose of this invention is to reduce battery usage, thereby helping to eliminate child labor in cobalt production in Africa and South Asia. Additionally, it aims to reduce the use of plastics and metals, contributing to overall waste reduction.

The purpose of this invention is to remove the need for buried wiring in walls for sockets. Users can have peace of mind regarding the health and environmental damages caused by current connectors. Additionally, this invention reduces the risks of fire, explosion, and fuse-related incidents that often occur with current connectors, along with providing many more benefits.

The purpose of the invention is to provide support for up to 6 watt transfer. The wireless power transfer system is capable of transmitting up to 6 watts of power from the transmitter to the receiver, utilizing a power optimization protocol that adjusts based on receiver load conditions.

Another purpose of the invention is to provide non-line-of-sight operation. The invention doesn't require the transmitter and receiver to be lined up or see each other without obstruction that is rendering interruption to function. The invention's transmitter sends a beacon signal that bounces off objects and walls to communicate with the receiver (and vice-versa), even when the receiver is in motion or behind objects in the room, like furniture or retail displays.

Another purpose of the invention is to enables multi-directional (360°) energy transmission. The invention also allows for energy transmission from one transmitter to several receivers.

The invention operates across different levels. This invention is capable of achieving all these functionalities simultaneously.

Because of the two-way communication potential of MRT-E,/RF, the system provides many benefits. The user defines and prioritizes by the software in his mobile or PC which devices need to be powered. Users can set up and control who receives power and when. The system provides the ability to view which devices are receiving/have received power, how much, and how long.

The transmitter can sense when there are no devices in range and will go to "sleep" for maximum efficiency. Data received from the receiver can be transferred in real-time to the user's mobile or PC.

The system allows the user to command the transmitter on what data content should be sent to the receiver, such as displaying information on a receiver monitor, including price, weight, origin, and all the data for 500 grams of meat or 1 kilogram of rice on a price-tag display embedded with the system's receiver on a grocery shelf.

Between the user and transmitter, no other stations are needed, so no cloud solutions or external data management is needed to transfer the data to the receiver or receive data to the transmitter sent from the receiver.

The user doesn't need costly external cloud data administration. The system prods the user to improve energy efficiency. The system understands device usage, receives sensor alerts, transfers received data without external applications or stations and increases security. The data management remains in the user's hand only.

The system is a new technology using the capabilities of MRT and RF while extending them to new horizons by introducing its own protocol MRT-E what opens avenues to new technologies e.g., cardiac pacemakers will be charged remotely, LED lamps will be energized without cable, smart watches will not need anymore to be put on a touchpad to charge.

This system is particularly useful in real-world scenarios where direct line-of-sight between the transmitter and receiver is not possible, such as in buildings with multiple rooms and floors.

### Figures

Figure 1: View of self-resonating coil system transfer.
Figure 2: View of self-resonating coil system transfer with receiving coils.
Figure 3: View of signals.
Figure 4: View of sinusoidal-shaped patch.
Figure 5: View of helical antenna.
Figure 6: View of patch antenna with circular polarization.
Figure 7: View of signal isolation.
Figure 8: View of shielding.

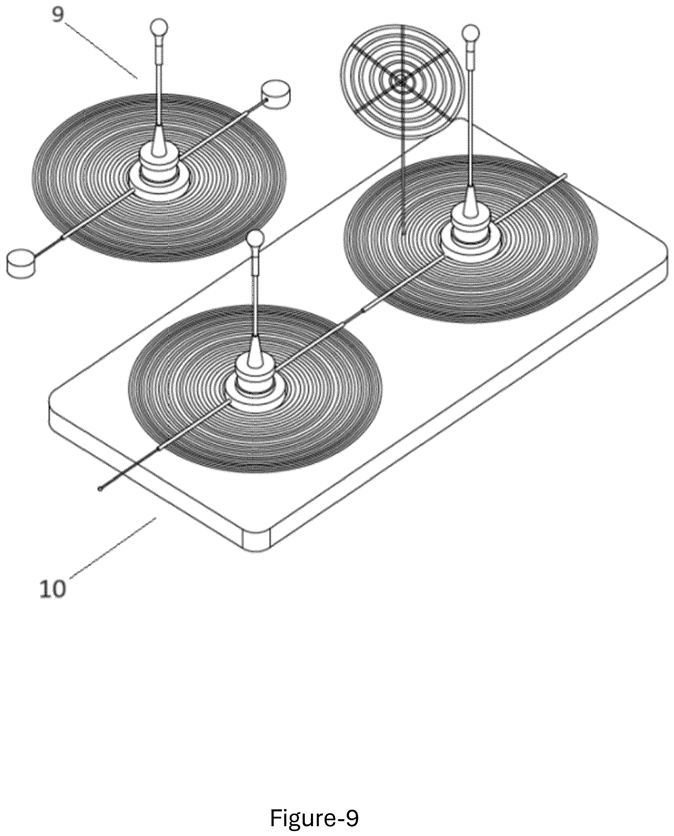

Figure 9: View of the patched antenna with enhanced resonance matching, including both a patch helical antenna and a patch antenna with circular polarization.

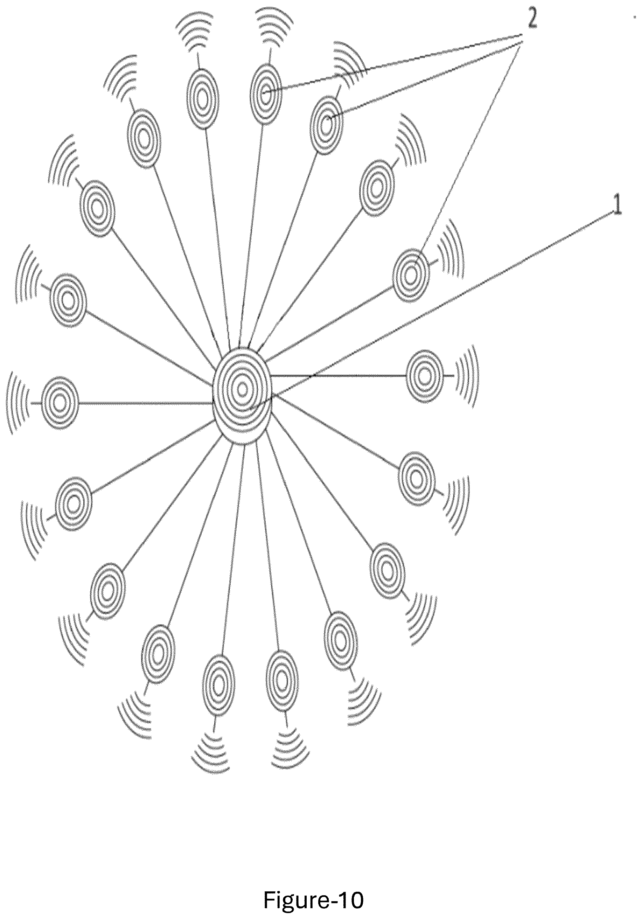

Figure 10: View of omnidirectional signal propogation.
   1. Transmitter
   2. Receiver
   3. Magnetic field lines
   4. Energy transfer arrows
   5. Resonant frequency
   6. Sinusodial-shaped patch
   7. Antenna base
   8. Magnetic resonant coupling
   9. Helical antenna
   10. Patch antenna
   11. Ferrite bead
   12. Absorptive tile

### Detailed Description of the Invention

The present invention relates to an advanced on-air energy transmission system utilizing magnetic resonance technology and radio frequency (MRT-E), designed to enable efficient energy transfer over practical distances for daily applications. This system is capable of transmitting energy up to 6 watts between a transmitter (1) and multiple receivers (2) within a 30-meter range and a 360-degree radius, across different levels, without the need for physical connectors.

The invention is generally to understand as an ISN (In-System-Network) employing mainly a combination of existing RF technology and magnetic resonance technology extended (MRT-E). By using a combination of technologies, the invention can overcome the disadvantages of RF technology limited by current circuit components, in wattage, range, and power loss, while keeping the advantages.

The system comprises a transmitter (1) and multiple receivers (2) equipped with self-resonating signal coils. The receivers (2) are arranged circularly around the transmitter (1). The self-resonant coil consists of two identical spiral coils, and the distance between them creates the series capacitance without any additional components. These coils are split into numerous loops to increase the coupling coefficient, thereby generating a higher magnetic field, which extends the transmission range up to 30 meters. This feature ensures simultaneous energy transfer to multiple receivers (2). The transmitter (1) coil is responsible for generating and sending the electrical signal. It consists of a series of loops or spirals through which current flows, creating a magnetic field that induces a corresponding signal in the receiver (2) coil. The receiver (2) coil captures the magnetic field generated by the transmitter (1) coil and converts it back into an electrical signal. It also consists of a series of loops or spirals, designed to receive the energy efficiently. The space between the transmitter (1) and receiver (2) coils represents the region where energy transfer occurs. This is typically depicted by signal lines or patterns showing the magnetic field lines (3) extending from the transmitter (1) coil to the receiver (2)coil.

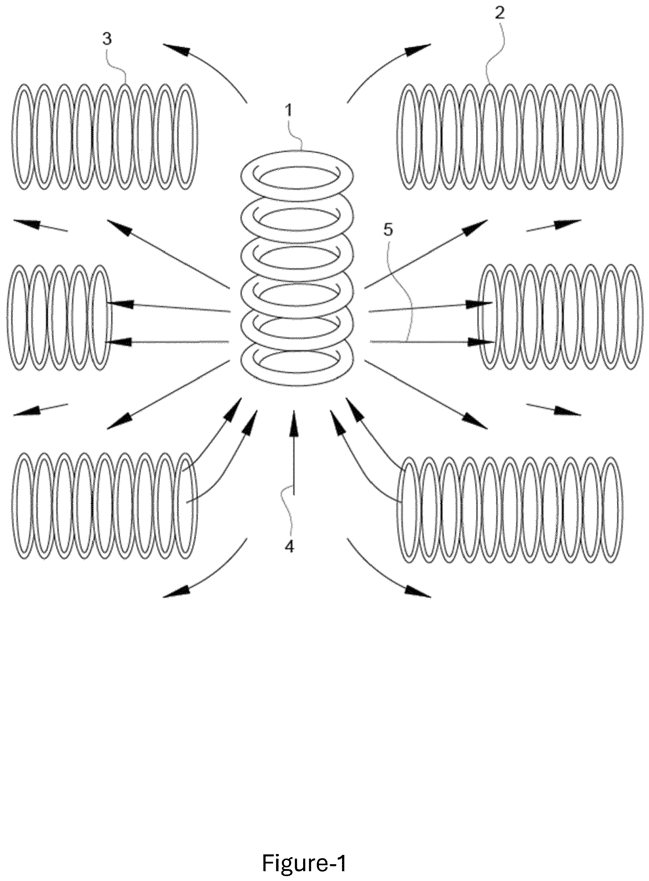

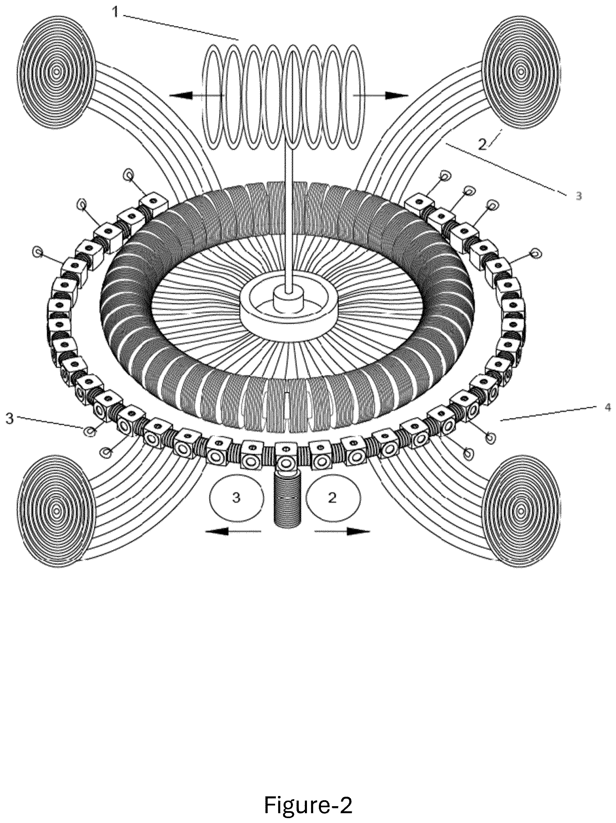

As seen from Figure 1 and Figure 2, the system bases on self-resonating signal coils both at the transmitter (1) and receiver (2) ends. The central transmitter (1) coil acts as the primary transmitter (1) of power. The central transmitter (1) coil is usually a spiral or helical coil. Surrounding the central coil are receiver (2) coils, which are designed to resonate at the same frequency as the central transmitter (1) coil. Magnetic field lines (3) shows the flow of energy from the central transmitter (1) coil to the receiver (2) coils. Resonant frequency (5) shows that both the central transmitter (1) coil and the receiver (2) coils are turned to the same resonant frequency. Energy transfer arrows (4) used to depict the direction of energy transfer from the transmitter (1) to the receiver (2) coils.

The self-resonating signal coils are designed to amplify the signal within the transmitter (1) and receiver (2), enhancing the overall range and efficiency of the power transfer system. They work by regenerating the signal as it travels, ensuring that the power levels remain high over long distances. The self-resonating (reproducing) coils are designed to amplify and stabilize the signal within both the transmitter (1) coil and receiver (2) coil, enhancing overall range and efficiency. These coils maintain the resonant frequency, optimizing the energy transfer process and ensuring minimal signal loss over long distances.

The invention comprises a receiver (2) as mentioned above. The coils are created by signals, and the establishment of the connection between both the transmitter (1) (Tx) and receiver (2) (Rx) ensures their functionality by those coils created by both TX and Rx. The coils are not solely dependent on the transmitter (1); rather, they are dispersed by Tx and Rx jointly within the created magnetic field. This magnetic field sufficiently covers a range of 30 meters in all directions (up/down/sideways). As the distance increases, the magnetic field weakens, and consequently, the signal strength of the coils diminishes accordingly. So, multiple receivers (2) can simultaneously receive the transmitted signal. Each receiver (2) is equipped with a coil that resonates at the same frequency as the transmitter (1) coil, allowing it to efficiently capture and convert the transmitted energy. Transmitter (1) coil located at the center of the receiver (2) and coils, emitting signals radially.

The invention's transmitter (1) sends a scouting RF signal in a 360° radius, and a receiver (2) antenna within a device receives it, initiating the negotiation between the receiver (2) and transmitter (1) to set the energy transfer frequency and the required load for the receiver (2). It then reciprocates with a 2.4 GHz beacon signal rectified by MRT-E for self-re-producing coils that reach the power transmitter (1) quickly and automatically. The transmitter (1) then identifies the receiver (2), learns the need it for power, and sends the quantity of power along the open paths of the incoming signal at the same or a different frequency. The invention works at several frequencies, e.g. at 6.78 MHz or 2.40 GHz, including Industrial, Scientific and Medical (ISM) frequency. The path-making radio waveforms are combined at the receiver (2) antenna and converted into DC power to power the device. Galvanizing isolation secures the signal protection additionally. Potentially hundreds of devices can be charged/fed, currently, the invention has limited this to 20. Transmitter (1) is structured to send power to up to maximum 20 receivers (2) simultaneously.

The system uses patched antennas (10) (both Patch Helical Antennas (9) and Patch Antennas with Circular Polarization) to achieve better resonance matching. These antennas are structured to match the resonance frequency of the transmitter (1) and receiver (2) coils, minimizing signal loss and maximizing efficiency. The resonance matching process ensures the energy transfer is optimized for long-range transmission. By matching the resonant frequencies, the system can take advantage of resonance to transfer energy more effectively over long distances.

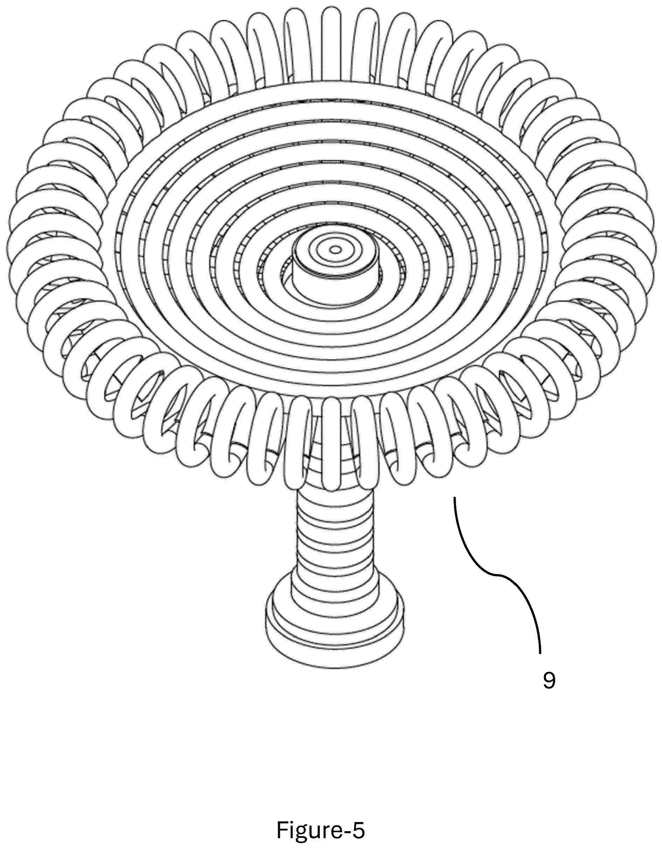

The system utilizes patched antennas, including patch helical antennas (9) and patch antennas (10) with circular polarization, which are finely tuned for enhanced resonance matching. This minimizes signal loss and interference, providing a robust and stable energy transfer. Figure 5 shows the helical antenna (9). A helical antenna (9) consists of a helix-shaped conductor, typically wound around a central axis. It supports circular polarization and has good directional properties. The helical shape inherently supports circular polarization, which is beneficial for reducing signal loss due to polarization mismatch. The use of a patch helical antenna (9) helps achieve higher power transmission efficiency, allowing the system to handle greater loads.

Helical antennas (9) can be designed to be directional or omnidirectional, depending on the number of turns and the spacing between turns. Helical antenna (9) offers wide bandwidth, making it suitable for various frequencies used in MRT-E systems.

Helical antenna (9) can be used for transmitting and receiving energy in MRT-E systems, providing efficient coupling and reducing losses and also suitable for wireless data transmission in addition to power transfer, leveraging its wide bandwidth.

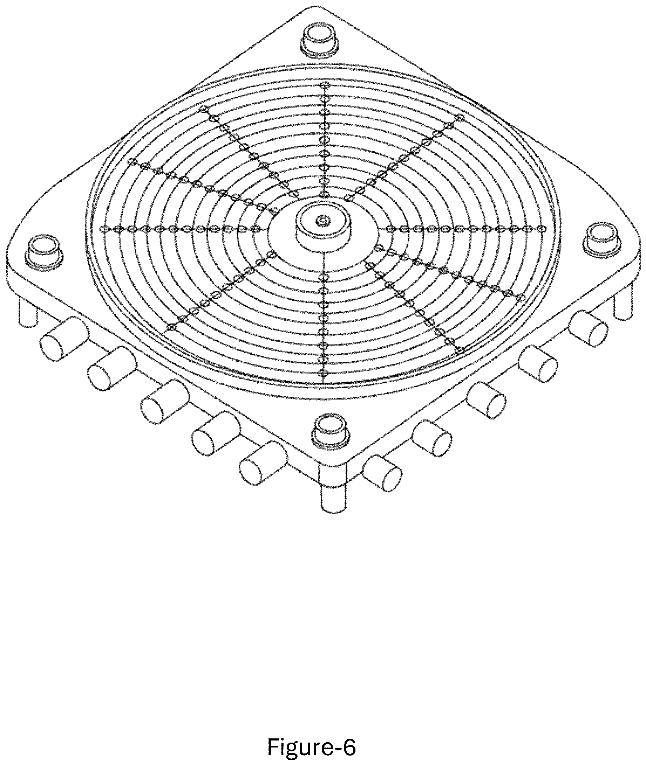

Figure 6 shows the patch antenna (10) with circular polarization which is a flat, planar antenna typically made of a metal patch on a grounded substrate. When designed for circular polarization, the patch antenna (10) can effectively radiate or receive signals in a circular pattern. This type of antenna ensures that the received power is maximized and interference is minimized, contributing to the system's ability to handle enhanced load transmission. The patch antenna (10) is compact so flat and lightweight, making it easy to integrate into various devices and systems. The patch antenna (10) achieved through specific feed techniques (e.g., dual-feed or slot cuts) or design modifications (e.g., truncating corners) and also typically radiates in a hemispherical pattern, providing good coverage in the desired direction.

The patch antenna (10) is ideal for applications where space is limited, such as wearable devices or compact sensors and it can be mounted on various surfaces, providing flexibility in system design.

The system uses advanced signal shielding techniques, using intelligent materials such as ferrite beads and absorbing tiles, are employed to minimize drift interference and noise. This ensures a stable and interference-free transmission, maintaining the integrity of the signal over extended distances.

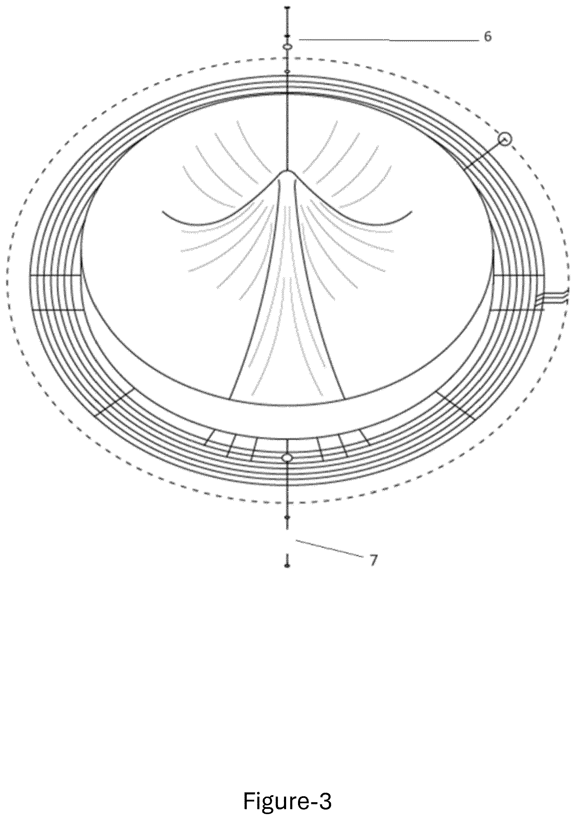

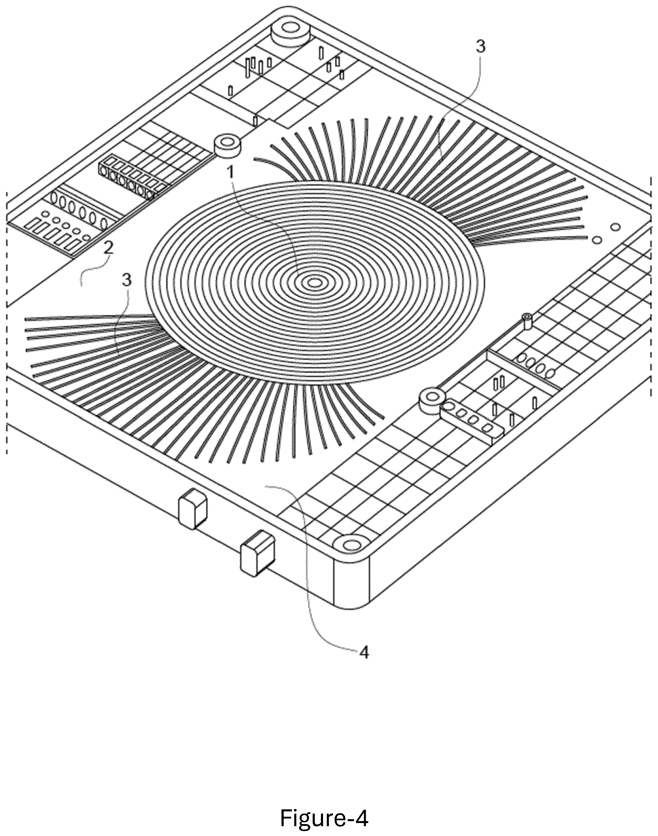

Figure 3 and figure 4 shows the signal and sinusoidal-shaped patch (6). The central feature of the antenna is the sinusoidal-shaped patch (6). This sinusoidal-shaped patch (6) has a wave-like pattern and is responsible for the magnetic resonant coupling (8) in the antenna system. The antenna base (7) supports the sinusoidal-shaped patch (6). It provides the necessary structure and contains electronic components for the antenna's operation. Magnetic resonant coupling (8) refers to the mechanism by which energy is transferred wirelessly through resonant magnetic fields. The sinusoidal-shaped patch (6) generates these magnetic fields, which interact with corresponding fields in the receiving devices. The surface is decorated with various intricate patterns and designs, representing the paths of the magnetic fields and the layout of any electronic components pertaining to the transmitter (1) and receiver (2). For maximum efficiency, the frequency of the sinusoidal waveform (patched-) signal is matched to the resonant frequency of the transmitter (1) and receiver (2) coil circuit. This matching enables the system to take advantage of resonance, significantly increasing the energy transfer efficiency over a distance.

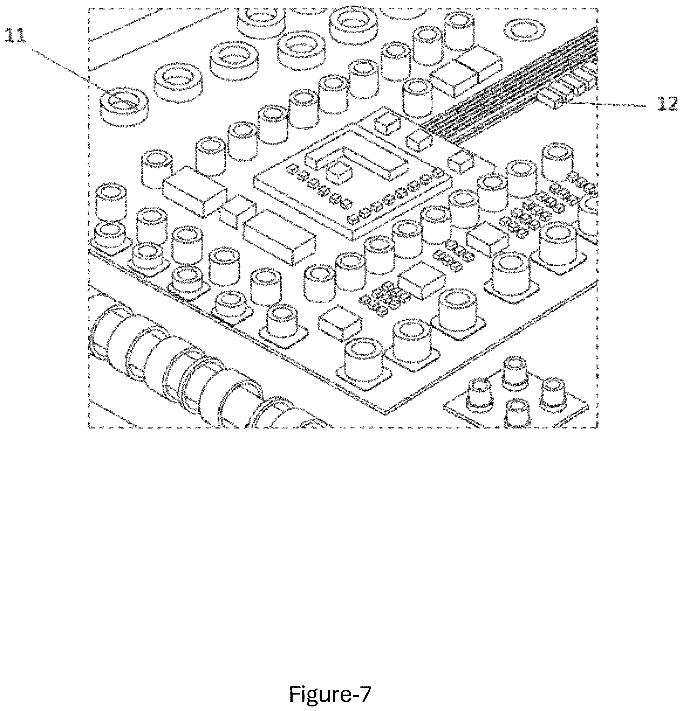

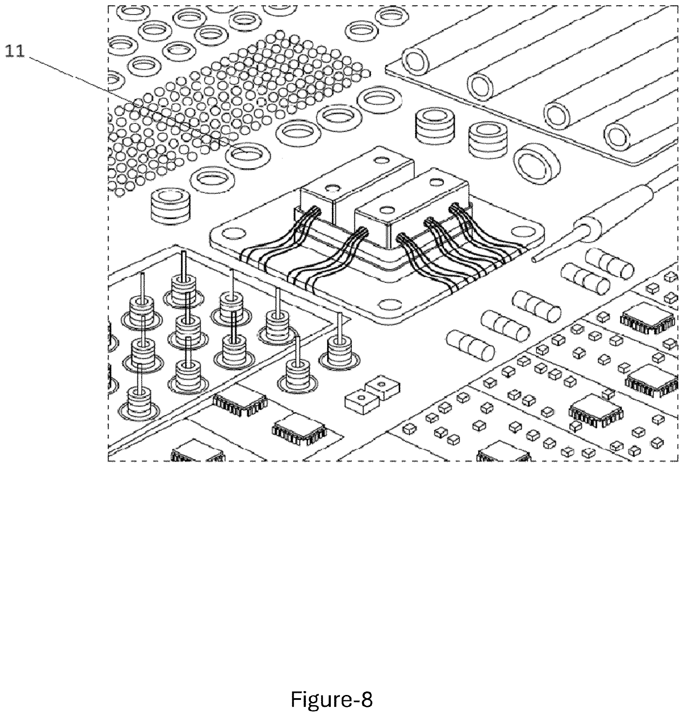

Figure 7 and Figure 8 shows signal isolation and/or shielding. Ferrite beads (11) are cylindrical components that clamp around cables to suppress high-frequency noise. They work by dissipating high-frequency signals as heat, thus reducing electromagnetic interference (EMI). Ferrite beads (11) are commonly used in power cables and data lines to filter out noise and ensure signal integrity. Ferrite beads (11) are placed around cables, especially at points where the cables enter or exit devices. Adopting the application scenario signal shielding can be made by employing patched PCB boards, cables, and other intelligent materials such as ferrite beads or absorbing tiles among alternating absorptive materials. These materials help to ensure that the signal remains strong and stable over long distances by reducing interference and maintaining signal integrity. Electromagnetic absorbing materials help minimize drift, interference, and noise.

The combination of self-resonating signal coils, patched antennas with enhanced resonance matching, and advanced signal shielding techniques are important in the field of wireless power transfer. Both the transmitter and receivers (2) are tuned to the same resonant frequency, maximizing the efficiency of energy transfer. This matching is crucial for maintaining power levels after the signal has passed through obstacles.

Absortive tile (12) is flat, often square components placed on or near circuit boards to absorb unwanted electromagnetic waves. They are made from materials that convert electromagnetic energy into heat. Absortive tile (12) is commonly used in shielding applications where space constraints prevent the use of larger shielding enclosures. Ideal for high-frequency circuits. Absortive tiles (12) are placed on or near sensitive components on printed circuit boards to absorb EMI before it can affect the circuit's performance.

The system is highly efficient, scalable, and inherently safe. Powering devices in motion and non-line-of-sight situations provides a significant advantage, especially within consumer device use cases. The system can be soon integrated into current battery-operated devices as well, by retrofitting them with a receiver (2) that's in the shape of a standard AA or AAA battery, for instance. The battery will stay perpetually charged as long as it stays within range of a transmitter.

The system excels in several aspects; it covers a wide field (30 m), radiates energy in a 360° radius, can power up to 20 receivers (2) simultaneously, operates reliably in diverse weather conditions (-40 to +50°C), and ensures data security by avoiding reliance on third-party solutions.

The system employs a unique omnidirectional propagation method, allowing signals to be transmitted multi-directionally at 360 degrees. The electromagnetic signals radiate from the transmitter uniformly in all directions (360 degrees). This is achieved through the design of the transmitter antenna, which may include phased-array antennas and dynamic field control to ensure consistent signal strength and minimal loss.

The central transmitter (1) coil generates electromagnetic fields that propagate outward in all directions. This omnidirectional propagation ensures that the signal can reach receivers (2) placed at any location around the transmitter (1). This is achieved using a combination of phase-array antennas and dynamic field control, ensuring consistent power delivery to receivers (2) positioned in any direction relative to the transmitter(1). Hence, wireless power transfer (WPT) technology provides a 360° propagation radius, signals are being sent multi-directional 360° by propagating patched signals. Wireless Power Transfer (WPT) technology also operates across levels, with a non-line-of-sight range of up to 30 meters. The transmitter (1) (Tx) can send the electricity signal up to 30 m being received by multiple Receiver/s (2) (Rx/s) simultanously.

To facilitate signal transmission through walls, ceilings, and other obstacles, the system incorporates adaptive field modulation. This technique dynamically adjusts the electromagnetic field to optimize penetration and minimize loss as the signal traverses different types of obstacles. It ensures that the signal remains strong enough to be efficiently captured by the receivers, regardless of the intervening materials. This technique also adjusts the electromagnetic field properties in real-time to optimize signal strength and maintain energy transfer efficiency across different barriers. The transmitter generates and emits an electromagnetic field designed for wireless power transfer. This field is modulated to penetrate through physical barriers such as walls, ceilings, and floors. Multiple receivers are strategically placed to capture the transmitted signal after it has passed through various obstacles. Each receiver is tuned to the same resonant frequency as the transmitter to efficiently capture and convert the transmitted energy back into electrical power.

It supports a maximum power supply of 20W at the transmitter side and up to 6W at the receiver side, allowing multiple receivers to be connected simultaneously for energy harvesting.

The invention provides an efficient and reliable magnetic resonance on-air energy transmission system, applicable in various fields. It can be used for on-air feeding and charging of electronic and electrical devices, potentially leading to the development of battery substitutes or rechargeable batteries. This technology is particularly advantageous in environments where direct line-of-sight between the transmitter and receiver is not feasible, such as in multi-room buildings or outdoor settings.

By implementing these advanced features, the present invention offers a robust solution for wireless energy transfer, ensuring high efficiency and reliability in diverse practical applications.

The invention can charge dozens of electric/ electronic devices within a 90-foot/30-meter radius. All main components used in the technology are custom-designed proprietary components. The invention is economical, comparable with a copper power cord -such as a regular phone power cable- which loses energy 5% at 1 m whilst the invention has the same loss at 30 m.

Since the invention's receiver (2) sends a beacon signal that bounces off objects but not organic matter, and the invention's transmitter delivers wireless power along the same paths, the transfer of energy is inherently safe. It naturally avoids people and pets.

The invention's transmitter can continuously deliver power (up to 90 feet/30 meters) in all directions even as multiple devices move within that radius or pass behind objects, such as furniture. What's more, the invention will track and deliver power and data simultaneously to devices in motion, even as they are moving at speeds greater than 3 meters per second, without the need for a complex tracking algorithm. Unlike most other wireless power solutions, line of sight is not required.

The MRT-E protocol enables the invention's single transmitter (1) to send 20 watts. The further away the device, the fewer watts of power the receiving device will catch but still as much as it needs to function (e.g., a PC mouse needs solely 8 mW and receives only 8 mW.) The system provides a maximum of 20 watts at the transmitter (1) side and a maximum of 6 watts at the receiver (2) side, with the capability of connecting multiple receivers (2) for power harvesting. In this system there is no requirement for the quantity of receivers (2) or the reduction in distance. The operating load requirement of each receiver (2) is relevant. For example, a series of LED lamps, each operating at 250 milliwatts, can theoretically combine up to 80 receivers (20 W ÷ 250 mW = 80). However, the transmitter (1) is limited to simultaneously feeding a maximum of 20 receivers (2). The higher the load, the fewer receivers (2) can be connected.

The system keeps the device continually powered up, even a temporary power outage cannot hinder the invention's receiver (2) from its service, the supercapacitor or Li-Ion battery embedded in the receiver (2) can feed the device for a while.

The system is flexible and adaptive in the design of its receivers (2)and transmitters (1). The receivers (2) are small, they can fit in the earpiece of an eyeglass or a standard AA battery and in (nearly) every IoT device and wearable a price tag. It can be as thin as a credit card, even thinner. This is possible due to the sharp focus of the transmitter (1) array. The system is absolutely form factor agnostic and can use any type of antenna based on design requirements. Transmitter (1) size is variable and depends on the distance and power quantity to be transferred.

The system is superior at delivering power further than existing technologies because the transmitter (1) and the receiver (2) are connected by a solid bridging signal line produced by the MRT-E with the pre-negotiating (leading) signal of RF. The receiver (2) only needs to send a low-powered beacon to the transmitter (1) to communicate its ID and power need. The transmitter (1) does not need to constantly communicate with the receiver (2) except for sending power and data. The system's transmitter (1) antennas are bi-directional, which results in doubling the cost of the initial signaling; however, the system's receiver (2) uses far less energy to receive the power, which increases the efficiency of the system and decreases overall costs.

The system is ideal for mobile phones, smartwatches, mobile phones, sensors (home, medical, automotive, retail, or industrial), all wearables, electronic price tags, and other small electronics.

Wireless power technology for daily use must meet several key requirements: it should be efficient, ensuring power is focused and directed only to selected devices to avoid wastage. The power transmission should be telic, traveling over air solely to the chosen device without powering all devices in the vicinity, thereby conserving energy. Mobility is essential; the receiver (2) should maintain spatial freedom, receiving power without disconnection or reduced performance, and the transmitter (1) should automatically track devices without complex algorithms. Non-line-of-sight capability is crucial, allowing receivers (2) to function without being directly in front of the transmitter (1), similar to Wi-Fi. Safety standards should match those of Wi-Fi and Bluetooth, ensuring widespread acceptance. The power transferred must be sufficient to operate or charge devices as effectively as physical connections, with transfer losses kept comparable to those of physical means like cables or Qi charging to ensure affordability. The invention corresponds to those conditions at the same time.

## Claims

1. A wireless power transfer system, comprising;
• A transmitter (1) operative to resonance matching for generating and transmitting an electrical signal, equipped with a self-resonating signal coil, and positioned at the center of receivers (2) to emit signals radially,
• Multiple receivers (2) operative to provide capture and conversion of the transmitted energy, equipped with a self-resonating signal coil, and arranged circularly around the transmitter (1),
• A self-resonating signal coil that works by regenerating the signal as it travels and placed at both the transmitter and receivers end to enhance signal stability and range.

2. A wireless power transfer system according to claim 1, **characterized in that** said transmitter (1) is structured to send power to up to maximum 20 receivers (2) simultaneously.

3. A wireless power transfer system according to claim 1, **characterized in that** said receiver (2) is equipped with a coil that resonates at the same frequency as the transmitter (1) coil, allowing it to efficiently capture and convert the transmitted energy.

4. A wireless power transfer system according to claim 1, **characterized in** comprising signal coils split into numerous loops to increase the coupling coefficient to generating a higher magnetic field.

5. A wireless power transfer system according to claim 1, **characterized in** comprising a patch antenna (10) structured to match the resonance frequency of the transmitter and receiver coils, minimizing signal loss and maximizing efficiency.

6. A wireless power transfer system according to claim 5, **characterized in** comprising a patched antenna (10) with enhanced resonance matching, suitable for both patch helical antennas (9) and patch antennas with circular polarization.

7. A wireless power transfer system according to claim 1, **characterized in** comprising signal shielding that employs ferrite bead (11) and absorptive tile (12) to minimize drift interference and noise.

8. A wireless power transfer system according to claim 1, **characterized in** comprising a power optimization protocol that adjusts based on receiver load conditions which is capable of transmitting up to 6 watts of power from the transmitter to the receiver.

9. A wireless power transfer system according to claim 1, **characterized in** comprising an omnidirectional propagation system that allows signals to be transmitted multi-directionally at 360 degrees without significant loss of power, using a combination of phase-array antennas and dynamic field control.

10. A wireless power transfer system according to claim 1, comprising said transmitter (1) coil transmitting electricity signals up to 30 meters simultaneously to receiver (2) coil via self-resonating coil.

11. A wireless power transfer system according to claim 1, **characterized in** comprising an antenna base (7) that supports the sinusoidal-shaped patch (6) and provides the necessary structure and contains electronic components for the antenna's operation.
